# EUROPEAN PATENT APPLICATION

(11) **EP 4 796 931 A1**
(43) Date of publication of application: **26.08.2026**
(21) Application number: 25159432.1
(22) Date of filing: 21.02.2025
(51) Int. Cl.: G01P 5/02, B64D 43/02, G01P 13/02

(54) **A MEASUREMENT APPARATUS FOR DETERMINING A VELOCITY OF A FLUID**

(71) Applicant: AIRBUS HELICOPTERS DEUTSCHLAND GmbH, 86609 Donauwörth (DE)
(72) Inventor: RIES, Tobias, 86695 NORDENDORF (DE); WEBER, Simone, 81241 MUNICH (DE)
(74) Representative: GPI Brevets

(57) **Abstract**

The present technology relates to a measurement apparatus 200 for determining a velocity of a fluid relative to a vehicle 100. The measurement apparatus 200 includes a processing system 610 and a sensor arrangement 224 that is mounted to the vehicle 100. The sensor arrangement includes a bendable rod 210 and sensors 224a, 224b, 224c, 224d. The bendable rod 210 is attached to the vehicle 100 and has a predetermined shape and stiffness. The sensors are associated with the bendable rod 210 and generate a signal that is indicative of a force or moment 230 that the fluid exerts on the bendable rod 210. The processing system 610 receives the signal 620 from the sensors and determines the velocity of the fluid relative to the vehicle 100 based on the signal 620 from the sensors 224a, 224b, 224c, 224d and the predetermined shape and stiffness of the bendable rod 210.

## Description

The present technology relates to a measurement apparatus for determining a velocity of a fluid relative to a vehicle. The present technology also relates to a rotary-wing aircraft having such a measurement apparatus.

Measuring the velocity of a fluid is used in many areas including climatology, oceanography, weather forecasting, construction, power generation, etc. Other applications of measuring the velocity of a fluid include measuring the velocity of a fluid relative to a vehicle such as a vessel (e.g., the velocity of water relative to a submarine or the velocity of water and/or air relative to a sailing boat), an aircraft (e.g., a plane, a drone, or a helicopter), a spacecraft, a ground vehicle (e.g., a car, a bus, a truck, or a train), etc.

As an example, measuring the velocity of air relative to an aircraft enables the pilot of the aircraft to operate the aircraft within its optimal performance parameters including lift, drag, stress on the airframe, critical stall speed, fuel management, etc.

Pitot tubes, which are also called Prandtl tubes, are often used on aircrafts to determine the relative velocity of the air surrounding the aircraft. Such Pitot tubes are typically mounted to the fuselage of the aircraft and are based on measuring a static and a total pressure.

For example, documents US 3 407 655 A, CA 2 279 246, and CA 2 325 023 describe Pitot tube type anemometers that are based on measuring a static and a total pressure. For example, document CA 2 325 023 describes a Pitot-Static tube comprising a strut, an axially symmetric body fastened to the strut, pneumatic paths arranged inside the axially symmetric body and the strut, electric heating elements arranged inside the axially symmetric body and the strut, and three groups of orifices for determining total pressure, static pressure and angle of attack, characterized in that the orifices for measuring the static pressure are arranged on a plate up-stream of the strut.

However, Pitot tubes are not able to provide reliable pressure measurements at low velocities of air relative to the aircraft. Such low velocities are typically encountered during hover flight or low-speed movement relative to the ground.

Document US 10,877,060 B2 describes an omni-directional anemometer that includes a housing, a cavity, and a plurality of ports in fluid communication with the atmosphere. The ports may include at least one sensor configured to measure air pressure. The robust housing may be formed by additive manufacturing, casting, machining, or molding. The anemometer may include a controller configured to determine wind speed and direction using the air pressure measurement signals from the at least one sensor.

However, the described anemometer is built with relatively heavy materials such as steel or other robust high-strength materials. The described anemometer also includes a plurality of air pressure sensors that typically have a slow response time, are susceptible to environmental factors including mechanical shock, vibration, dust, humidity, and temperature, and are expensive. In addition, air pressure sensors are not sensitive enough at low velocities.

Document EP 4 163 643 A1 describes a wind estimation system for an aircraft that includes a first sensor configured to sense a first position associated with an aircraft control component in a wind condition, a second sensor configured to sense a first configuration associated with a rotor system of the aircraft in the wind condition, and at least one controller in communication with at least one of the first sensor or the second sensor. The at least one controller is configured to determine a tip-path-plane angle of the aircraft based on the first position and the first configuration, and determine at least one of a current wind speed or current wind direction based on the tip-path-plane angle.

Document US 6,419,186 B1 describes a standoff arm and probe assembly for a helicopter that has a standoff mounting arm that extends outwardly from the helicopter body in a selected direction, preferably forwardly. The standoff arm has an outer end that mounts a low lateral speed sensing probe that is positioned with an axis substantially parallel to the axis of a helicopter rotor, and within the downwash region of air movement causes by the rotor. The low lateral speed sensing probe has ports that are arranged annularly around the probe, and the pressures sensed at selected annular or peripheral locations on the probe are measured to determine low air speeds.

Both of these documents place the sensor for sensing low air speeds within the downwash region of air movement caused by the rotor which in turn causes air flow disruption. Rotor downwash also makes obtaining cross-wind components of the air flow difficult.

However, none of the above described solutions provides a lightweight, low cost, and high precision measurement apparatus that is able to determine low air speeds relative to an aircraft.

Based on the limitations and drawbacks of the prior art, an objective is to provide a measurement apparatus for determining a velocity of a fluid relative to a vehicle. The measurement apparatus should have low fault susceptibility relative to ambient conditions such as temperature, vibrations, and oscillations, be relatively simple, lightweight, and have low purchase and maintenance costs. The measurement apparatus should be easily accessible and replaceable, and perform precise measurements at low velocities.

These objectives are solved by a measurement apparatus comprising the features of claim 1. More specifically, a measurement apparatus for determining a velocity of a fluid relative to a vehicle comprises a sensor arrangement that is mounted to the vehicle and a processing system. The sensor arrangement comprises a bendable rod and sensors. The bendable rod is attached to the vehicle and has a predetermined shape and stiffness. The sensors are associated with the bendable rod and generate a signal that is indicative of a force or moment that the fluid exerts on the bendable rod. The processing system receives the signal from the sensors and determines the velocity of the fluid relative to the vehicle based on the signal from the sensors and the predetermined shape and stiffness of the bendable rod.

The bendable rod may be a few centimeters long. The bendable rod may be placed perpendicular to the direction of interest of the fluid flow. Illustratively, the bendable rod may have the shape of a rod antenna that is mounted onto the surface of the vehicle.

In the example of a rotary-wing aircraft with a main rotor, a tail rotor, a fin, and/or a T-shaped tail, the bendable rod may be attached to the rotary-wing aircraft, pointing upwards on the fin or the T-shaped tail. Thereby, the bending of the bendable rod is largely independent of the rotor downwash from the main rotor. Such a measurement apparatus can therefore also be used at low speeds.

The sensor arrangement includes sensors. The sensors may be suitable for determining deformation of the bendable rod. Examples of such sensors include electrical strain gauges, piezo sensors, optical fiber-Bragg grating (FBG) based measurement technology or optical fiber technology based on fiber segment interferometry (FSI). The sensors may extend along the longitudinal axis in the outer area of the bendable rod.

Technology based on FSI allows direct determination of a deformation of the bendable rod. In contrast thereto, material properties of the bendable rod are considered with other sensor technology solutions in order to draw conclusions about the deformation of the bendable rod. For example, knowledge of the cross-sectional properties of the bendable rod and the arrangement of the sensors on the bendable rod (e.g., the bending stiffness and the distance between the sensor and the neutral fiber of the bendable rod) may be used. A suitable calibration method may be used for electrical measurement sensors.

In the scenario of a direct measurement of the deformation of the bendable rod using FSI, several glass fibers may be embedded in grooves in the bendable rod and run along the outer area of the bendable rod cross-section. The sensor arrangement may include at least two (e.g., two, three, four, five, six, etc.) of such glass fibers distributed around the circumference of the bendable rod. Fiber-optic-based reflectors may be integrated into these glass fibers at certain intervals along the longitudinal axis of the bendable rod, which reflect light introduced at the base of the fiber. When the glass fiber is stretched or compressed, the propagation time of the reflected light changes, and therefore also the propagation times in the opposite fibers when the rod is bent. The fiber that is attached to the outside of the rod in the bending direction is compressed, while the opposite fiber is stretched.

The strength of the bending can be determined from both, the compressed and the stretched fibers. The stretching and compression can be determined not only at one point along the longitudinal axis of the bendable rod, but at all sections along the longitudinal axis of the bendable rod that are bounded by reflectors, so that even complex bending lines can be reconstructed. The bendable rod that is attached to the vehicle perpendicular to a fluid flow is subjected to a force or moment by the fluid flow and is bent as a result.

If the geometry and structural data of the bendable rod (e.g., the diameter, the shape, and the stiffness of the bendable rod) are known, a processing system that is connected to the sensors by a cable or wirelessly can correlate the bending line of the bendable rod directly with the flow velocity by means of calculation, simulation, reference measurements, or any combination thereof. Thus, the velocity of the fluid relative to the vehicle can be determined by measuring the bending line of the bendable rod.

The present measurement apparatus enables the determination of low fluid velocities (e.g., velocities of liquids and/or gases) relative to a vehicle (e.g., a vessel such as a submarine or a sailing boat, an aircraft such as an airplane, a drone, or a helicopter, a rocket, a spacecraft, or a ground vehicle such as a car, a bus, a truck, or a train). For example, the present measurement apparatus allows to determine velocities in the range between zero and 20 knots.

Furthermore, the present measurement apparatus is very robust and insensitive to electromagnetic waves and harsh environmental conditions such as rain, ice, snow, hail, high and low temperatures.

The measurement apparatus allows for a very high sampling rate, while providing high accuracy including full directional information of the measured velocity even though the sensors are small and very light.

The processing system of the measurement apparatus can be located in proximity of the sensor arrangement or at a predetermined distance from the sensor arrangement. For example, the processing system may have a distance from the sensor arrangement between zero and 50 meters.

The sensor arrangement can be built without electrics or electronics. Thus, no power supply is required at the sensor arrangement. However, in the scenario in which the bendable rod is electrically heated to prevent against icing, an electrical power supply is required.

According to one aspect, the force or moment causes a deformation of the bendable rod, and the sensors measure a strain in form of a compression or a stretching caused by the deformation of the bendable rod.

Illustratively, the sensors comprise at least one of an electrical strain gauge, a piezo sensor, or an optical sensor.

By way of example, the bendable rod has a neutral axis, and the sensors further comprise at least one series of aligned sensors that is provided at the bendable rod parallel to the neutral axis at a predetermined distance from the neutral axis.

According to one aspect, the at least one series of aligned sensors comprises at least three series of aligned sensors, and the processing system determines a magnitude and a direction of the velocity of the fluid in a plane that is perpendicular to the bendable rod.

In some implementations, the at least one series of aligned sensors comprises an even number of series of aligned sensors, wherein any two series of aligned sensors of the even number of series of aligned sensors that are arranged on opposite sides of the neutral axis are connected at a distal end of the bendable rod from the vehicle.

By way of example, a series of aligned sensors of the at least one series of aligned sensors comprises a fiber optic cable and optical reflectors embedded at predetermined distances from each other in the fiber optic cable.

Illustratively, the processing system determines tilt angles of the bendable rod based on measuring a change in distance between pairs of adjacent optical reflectors of the optical reflectors.

According to one aspect, the bendable rod further comprises a hosting material comprising a composite material having a fiber orientation that forms a predetermined angle with the neutral axis, and wherein the predetermined angle is selected between 30 degrees and 60 degrees to prevent torsional movements of the bendable rod.

In some implementations, the bendable rod varies in thickness and/or in rigidity along the neutral axis.

By way of example, the sensor arrangement further comprises an additional bendable rod that is attached to the vehicle perpendicular to the bendable rod and has an additional predetermined shape and stiffness, additional sensors that are associated with the additional bendable rod, generate an additional signal that is indicative of an additional force or moment that the fluid exerts on the additional bendable rod, and transmit the additional signal to the processing system, wherein the processing system determines a three-dimensional representation of the velocity of the fluid relative to the vehicle based on the signal and the additional signal.

Illustratively, the measurement apparatus further comprises an additional sensor arrangement having additional sensors associated with an additional bendable rod that is attached to the vehicle at a location that is protected from the fluid, and wherein the processing system uses measurements related to another force or moment acting on the additional sensors for filtering out parasitic forces or parasitic moments acting on the sensors.

In some implementations, the bendable rod further comprises a heating device that is adapted for preventing icing of the bendable rod; and an electric cable that is connected to the heating device and provides electricity to the heating device.

Furthermore, a rotary-wing aircraft comprises the measurement apparatus described above, wherein the rotary-wing aircraft further comprises a main rotor that is at least adapted for generating lift in operation, the main rotor comprising at least two rotor blades that create a downwash during rotation of the main rotor that affects a predetermined surface area of the rotary-wing aircraft, and wherein the bendable rod is attached to the rotary-wing aircraft outside the predetermined surface area.

Moreover, a method of operating a measurement apparatus for determining a velocity of a fluid relative to a vehicle, the measurement apparatus comprising a bendable rod that is attached to the vehicle, comprises the operations of using sensors that are associated with the bendable rod to measure a strain in the bendable rod caused by a force or moment that the fluid exerts on the bendable rod; using the sensors to generate a signal that is indicative of the force or moment; with a processing system, receiving the signal from the sensors; using the processing system to determine a bending of the bendable rod based on the signal from the sensors; using the processing system to determine the force or moment based on the bending of the bendable rod and predetermined material properties of the bendable rod; and using the processing system to determine the velocity of the fluid relative to the vehicle based on the force or moment and geometrical properties of the bendable rod.

Preferably, the predetermined material properties may at least include a stiffness of the bendable rod. In some implementations, the processing system may receive data related to temperature and ambient pressure in the vicinity of the bendable rod, determine a density of the fluid in the vicinity of the bendable rod, and determine the velocity of the fluid relative to the vehicle based on the force or moment, the geometrical properties of the bendable rod, and the density of the fluid in the vicinity of the bendable rod.

Embodiments are outlined by way of example in the following description with reference to the attached drawings. In these attached drawings, identical or identically functioning components or elements are labeled with identical reference numbers and characters and are, consequently, only described once in the following description.
Figure 1 is a diagram of an illustrative rotary-wing aircraft with an illustrative measurement apparatus for determining a velocity of air relative to the rotary-wing aircraft,
Figure 2A is a diagram of an illustrative sensor arrangement with a bendable rod and sensors,
Figure 2B is a diagram of the illustrative sensor arrangement of Figure 2A when a fluid exerts a force or moment on the bendable rod,
Figure 3A is a diagram of an illustrative bending rod with series of aligned sensors that are attached to the bendable rod parallel to a neutral axis of the bendable rod,
Figure 3B is a cross-sectional view of the illustrative bendable rod with series of aligned sensors of Figure 3A,
Figure 4 is a diagram of an illustrative sensor arrangement with two bendable rods that are arranged perpendicular to each other,
Figure 5A is a diagram of an illustrative sensor arrangement with three bendable rods that are arranged perpendicular to each other at a same base,
Figure 5B is a diagram of an illustrative sensor arrangement with three bendable rods that are arranged serially and perpendicular to each other,
Figure 5C is a diagram of an illustrative sensor arrangement with three bendable rods that are arranged perpendicular to each other at a same base and that have spherical shapes at the distal end from the base with two series of aligned sensors that are connected with each other in the spherical shapes, and
Figure 6 is a diagram of an illustrative processing system of an illustrative measurement system that receives a signal from the sensor and provides a magnitude of a velocity and an angle of the velocity to a display and an alert system.

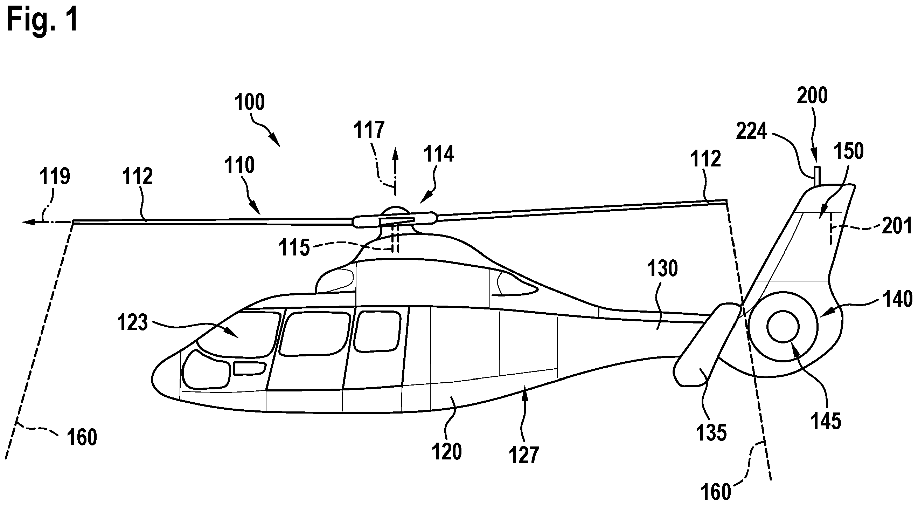

Figure 1 is a diagram of an illustrative rotary-wing aircraft 100 having at least one rotor 110 with a rotor shaft 115. As shown in Figure 1, the rotary-wing aircraft 100, which is sometimes also referred to as rotorcraft 100, is exemplarily illustrated as a helicopter. Thus, for purposes of simplicity and clarity, the rotorcraft 100 is hereinafter referred to as the "helicopter" 100.

Illustratively, helicopter 100 may have a fuselage 120 that forms an airframe of the helicopter 100. The fuselage 120 is connected to a suitable landing gear and exemplarily forms a cabin 123 and a rear fuselage 127. The rear fuselage 127 is connected to a tail boom 130.

By way of example, helicopter 100 may include at least one counter-torque device 140 configured to provide counter-torque during operation, i.e. to counter the torque created by rotation of the at least one rotor 110 for purposes of balancing the helicopter 100 in terms of yaw. If desired, counter-torque device 140 may be shrouded. The at least one counter-torque device 140 is illustratively provided at an aft section of the tail boom 130 and may have a tail rotor 145. The aft section of the tail boom 130 may include a fin 150. Illustratively, the tail boom 130 may be provided with a suitable horizontal stabilizer 135.

Illustratively, helicopter 100 may have at least one rotor 110, which is illustratively provided as a multi-blade rotor 110, for providing lift and forward or backward thrust during operation. The at least one multi-blade rotor 110 comprises a plurality of rotor blades 112 that are mounted at an associated rotor head 114 to a rotor shaft 115, which is sometimes also referred to as rotor mast 115. The rotor shaft 115 rotates in operation of the helicopter 100 around an associated rotor axis 117 in a rotor plane 119, whereby the rotating rotor blades 112 create a downwash during rotation of the multi-blade rotor 110 that affects a predetermined surface area 160 of the rotary-wing aircraft 100.

The rotary-wing aircraft 100 includes a measurement apparatus 200 for determining a velocity of air relative to the rotary wing aircraft 100. The measurement apparatus 200 includes a processing system and a sensor arrangement 224 that is mounted to the rotary-wing aircraft 100. The sensor arrangement 224 includes a bendable rod that is attached to the rotary-wing aircraft 100. The bendable rod has a predetermined shape and stiffness.

The positioning of the bendable rod on the rotary-wing aircraft 100 may be selected so that the rotary-wing aircraft has little influence on the flow of the fluid (i.e., the air). In the case of a rotary-wing aircraft 100, the flow of the fluid may be influenced by the surfaces of the rotary-wing aircraft 100 such as the fuselage 120, the tail boom 130, the counter-torque device 140, or the fin 150. The flow of the fluid may also be influenced by the fluid flow that the moving parts such as the multi-blade rotor 110 or the tail rotor create.

Illustratively, the bendable rod is attached to the rotary-wing aircraft 100 outside of the predetermined surface area 160 of the rotary-wing aircraft 100 that is affected by the downwash during rotation of the multi-blade rotor 110. Installing the bendable rod outside of the predetermined surface area 160 of the rotary-wing aircraft 100 that is affected by the downwash is useful for measuring small velocities of air relative to the rotary-wing aircraft 100. If desired, existing disturbances due to interactions of the main rotor downwash, e.g. due to interferences with the ground or in quartering flight, could be filtered out by correction factors in combination with a measured height above ground. Such correction factors could be determined during reference flights.

As an example, the bendable rod may be attached to the fin 150. As another example, the bendable rod may be attached to a nose boom that is attached to the fuselage in front of the cabin 123 outside of the predetermined surface area 160 affected by the downwash.

The sensor arrangement 224 further includes sensors that are associated with the bendable rod and that generate a signal that is indicative of a force or moment that the air exerts on the bendable rod.

The processing system receives the signal from the sensors and determines the velocity of the air relative to the rotary-wing aircraft 100 based on the signal from the sensors and the predetermined shape and stiffness of the bendable rod.

The processing system can be installed anywhere on the rotary-wing aircraft 100. As an example, the processing system can be installed in proximity of the sensor arrangement 224 (e.g., in the tail boom 130). As another example, the processing system can be installed further apart from the sensor arrangement 224 in the fuselage 120 (e.g., in the cabin 123).

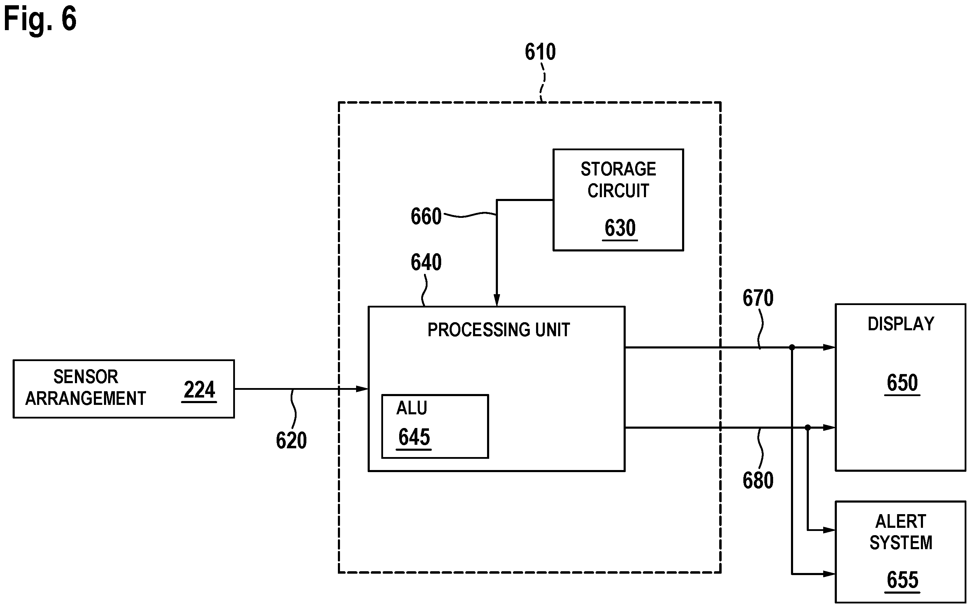

Independent of the positioning of portions of the processing system 610, the signal from the sensor arrangement 224 may be transmitted to the processing system via a wired connection. If desired, the signal from the sensor arrangement 224 may be transmitted to the processing system wirelessly. The processing system is described in more detail with reference to Figure 6.

If desired, the measurement apparatus 200 may include an additional sensor arrangement 201. The additional sensor arrangement 201 may include additional sensors associated with an additional bendable rod that is attached to the rotary-wing aircraft 100 at a location that is in proximity to the sensor arrangement 224 and protected from the fluid. For example, the additional bendable rod of the additional sensor arrangement 201 may be attached to the rotary-wing aircraft 100 inside the fin 150.

The processing system may use measurements related to another force or moment acting on the additional sensors for filtering out parasitic forces or parasitic moments such as vibrations of the structure of the rotary-wing aircraft 100 that are acting on the sensors. In some implementations, a notch filter may be used for filtering out parasitic forces or parasitic moments that are acting on the sensors.

The measurement apparatus 200 is not limited to determine the velocity of air relative to a rotary-wing aircraft and can likewise be installed on any other vehicle for determining the velocity of any fluid relative to that vehicle. As an example, the measurement apparatus may determine the velocity of a liquid such as water relative to a vessel such as a submarine or a ship. As another example, the measurement apparatus may determine the velocity of a gas such as air relative to an aircraft such as a plane or a drone, relative to a rocket or a spacecraft, or relative to a ground vehicle such as a car, a bus, a truck, or a train, etc. If desired, the measurement apparatus 200 may be used to determine the fluid velocity relative to a wind turbine, a weather measurement system, a building, or in a wind tunnel.

Illustratively, the measurement apparatus 200 may be used as an accelerometer as the sensors will also react to bending of the bendable rod, which is caused by externally induced accelerations of the bendable rod due to its inertia. Disturbances of the measurement of the fluid velocity due to externally induced accelerations of the bendable rod can be compensated for example by a parallel measurement of the acceleration with a pure accelerometer in the vicinity of the bendable rod.

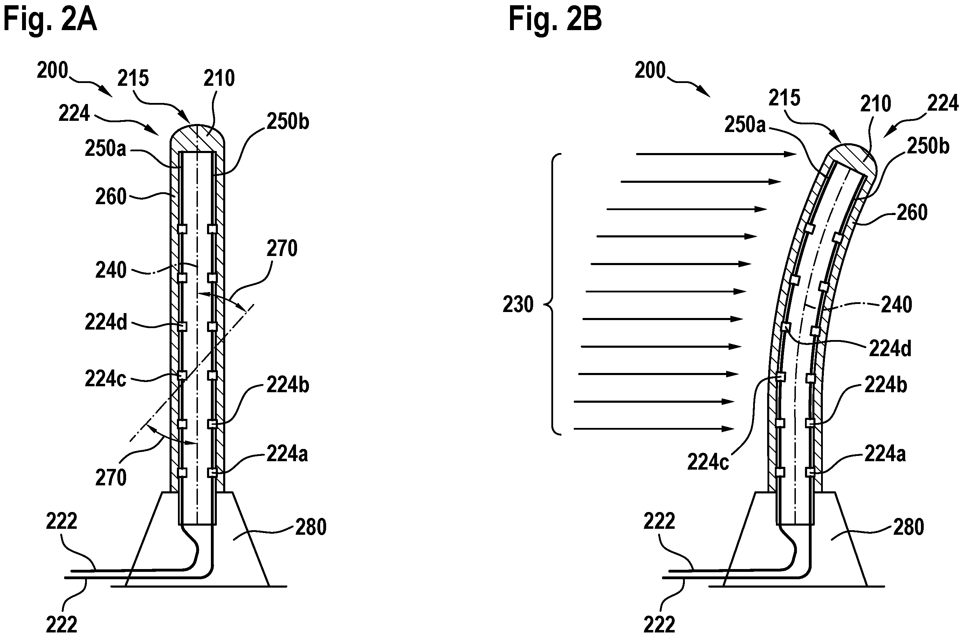

Figure 2A is a diagram of an illustrative sensor arrangement 224 of a measurement apparatus 200 for determining a velocity of a fluid relative to a vehicle. The sensor arrangement 224 is mounted to the vehicle and includes a bendable rod 210 and sensors 224a, 224b, 224c, 224d.

Illustratively, the bendable rod 210 is attached to the vehicle via a base 280. The bendable rod 210 has a predetermined shape and stiffness. As an example, the bendable rod 210 may have a cylindrical shape with a ratio between height (i.e., length of the bendable rod 210) and diameter (i.e., thickness of the bendable rod 210) in a range between five and 40. As another example, the bendable rod 210 may have a conical shape with or without the tip (i.e., the entire cone or the frustrum of the cone) with a ratio between height (i.e., length of the bendable rod 210) and diameter (i.e., thickness of the bendable rod 210) at the base in a range between five and 40.

If desired, the bendable rod 210 may vary in thickness and/or in rigidity along the length of the bendable rod 210. For example, the bendable rod 210 may have one or more cylindrical shapes with different diameters optionally combined with a conical frustrum. A bendable rod 210 with multiple cylindrical shapes with different diameters may result in different bending sensitivities along the length of the bendable rod 210 via variable stiffnesses.

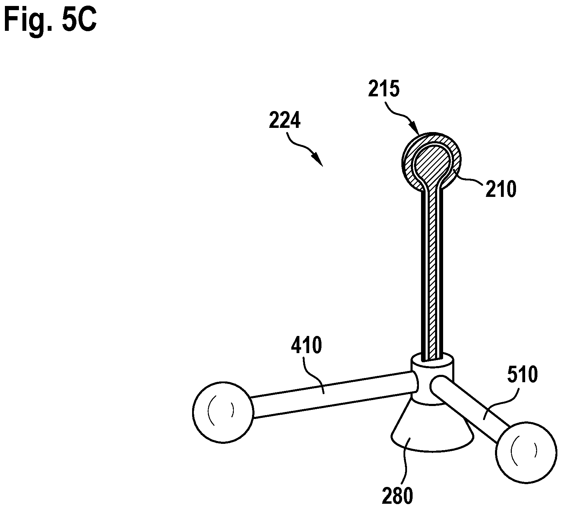

In some implementations, the bendable rod 210 may include additional elements such as a sphere or a cylinder at the tip in order to concentrate the measurement on flow areas that are further away from the flow-influencing surface to which the bendable rod 210 is attached. An illustrative implementation of such a bendable rod is shown in Figure 5C.

The bendable rod 210 is adapted for being bent along a bending line when a fluid exerts a force or moment on the bendable rod 210. Thereby, the force or moment causes a deformation of the bendable rod 210 in which a portion of the bendable rod 210 is compressed and another portion of the bendable rod 210 is stretched.

A neutral axis 240 separates the portion of the bendable rod 210 that is compressed from the portion that is stretched. Thus, the neutral axis 240 is the portion of the bendable rod 210 that is neither stretched nor compressed. As shown in Figure 2A, the neutral axis runs along the length of the bendable rod 210.

Illustratively, the bendable rod 210 may include a hosting material 260. The hosting material 260 may include any bendable material. For example, the hosting material 260 may include metal, plastic, rubber, wood, fabric, foam, or any combination thereof. By way of example, the bendable rod 210 may include different hosting materials 260 along the length of the bendable rod 210 to provide for a variable stiffness along the length of the bendable rod 210.

If desired, the bendable rod 210 may include a composite material. In some implementations, the composite material may be a fiber-reinforced composite material. In these implementations, the composite material may have a fiber orientation that forms a predetermined angle 270 with the neutral axis 240. Illustratively, the predetermined angle 270 may be selected between 30 degrees and 60 degrees to prevent torsional movements of the bendable rod 210.

If desired, a measurement error induced by torsional movements of the bendable rod 210 may be eliminated in addition or instead by means of a compensation measurement.

The sensors 224a, 224b, 224c, 224d are associated with the bendable rod 210 and generate a signal that is indicative of a force or moment 230 that the fluid exerts on the bendable rod 210. Illustratively, the sensors 224a, 224b, 224c, 224d are fixedly provided at the bendable rod 210. As an example, the sensors 224a, 224b, 224c, 224d may be attached to the surface of the bendable rod 210. As another example, the sensors 224a, 224b, 224c, 224d may be embedded in grooves that run along the outer area of the bendable rod 210. As yet another example, the sensors 224a, 224b, 224c, 224d may be embedded inside the hosting material 260. Thereby, the sensors 224a, 224b, 224c, 224d may be protected from environmental influences.

Illustratively, the force or moment 230 causes a deformation of the bendable rod 210, leading to a so-called bending line. The sensors 224a, 224b,224c, 224d may measure a strain in form of a compression or a stretching caused by the deformation of the bendable rod 210 along the bending line.

A processing system such as the processing system 610 described with reference to Figure 6 may correlate the bending line determined by the sensors 224a, 224b,224c, 224d directly with the incident flow velocity of the fluid using simulation and reference measurements. Thus, the measurement apparatus 200 can determine the velocity of the fluid by measuring the bending line.

Illustratively, the sensors 224a, 224b, 224c, 224d include at least one of an electrical strain gauge, a piezo sensor, or an optical sensor. For example, the sensors 224a, 224b, 224c, 224d may be implemented using several fiber-Bragg gratings (FBGs) in a fiber optic cable 222.

A fiber optic cable 222 that contains FBGs is very light weight, comparably small in dimensions, immune to electromagnetic interference, flexible, strong, compatible with composite materials, and no electrical power is needed for each sensor. For example, the fiber optic 222 cable may have a fiber optic cable diameter of 80 µm.

Illustratively, fiber optic cable 222 may include a fiber core (e.g., a glass fiber cable) that transmits light. The fiber core may be surrounded by a fiber cladding such that light is reflected from the fiber cladding back into the fiber core which assures minimum transmission loss. In fact, the fiber core may have a higher refractive index η than the fiber cladding which leads to complete reflection at the border between the fiber core and the fiber cladding.

If desired, the fiber optic cable 222 may include a protection jacket (e.g., a coating). The protection jacket may protect the fiber cladding and the fiber core from external conditions and physical damage.

A fiber-Bragg grating modulates the characteristics of a propagating light source. An interrogator in a processing system may include a light source and send light having a first predetermined wavelength profile to the FBG. The FBG may reflect light having a second wavelength profile as a signal back to the processing system. All other wavelengths of the input signal may be transmitted unaffected through the fiber optic cable 222.

Illustratively, the fiber-Bragg grating acts as a wavelength selective mirror, reflecting a predetermined wavelength profile back through the fiber optic cable 222. Perturbation of the grating (e.g., by strain or temperature) results in a change in the reflected wavelength profile, which is the basis of the sensing approach. Thus, a change of the force or moment that the fluid exerts on the bendable rod 210 causes a change of the second wavelength profile. If desired, multiple optical sensors with center wavelengths are distributed in a specific nm wavelength band to ensure correct monitoring of the signals.

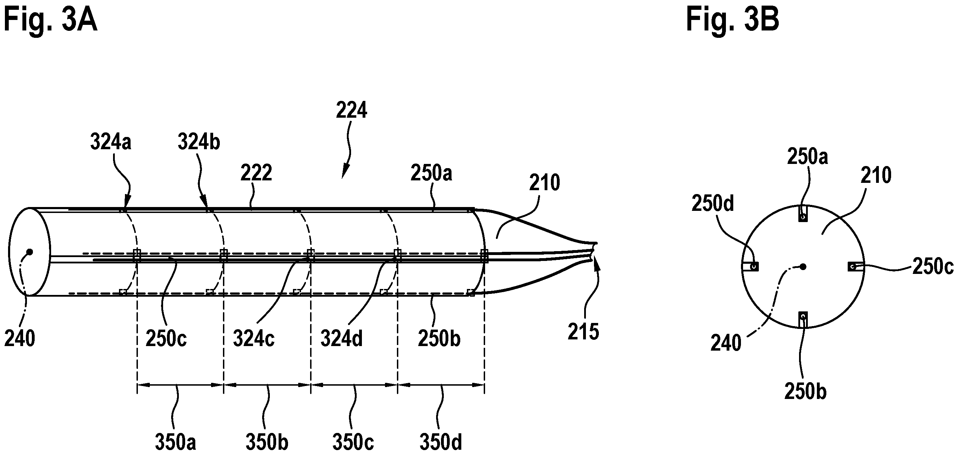

If desired, the sensors 224a, 224b,224c, 224d may perform the strain measurement by fiber segment interferometry (FSI). In FSI, the sensors 224a, 224b, 224c, 224d include optical reflectors embedded at predetermined distances from each other in the fiber optic cable 222 and measure a change in distance between pairs of adjacent optical reflectors to determine a tilt angle of the bending rod 210. The strain measurement by FSI is further described with reference to Figure 3A and Figure 3B.

Illustratively, the sensors 224a, 224b, 224c, 224d may include at least one series of aligned sensors 250a, 250b that is provided at the bendable rod 210 preferably parallel to the neutral axis 240 at a predetermined distance from the neutral axis 240.

Preferably, the sensors include at least three series of aligned sensors 250a, 250b, 250c, 250d, and the processing system (e.g., processing system 610 of Figure 6) determines a magnitude and a direction of the velocity of the fluid in a plane that is perpendicular to the bendable rod 210.

Figure 2B is a diagram of the illustrative sensor arrangement 224 of the measurement apparatus 200 of Figure 2A when a fluid exerts a force or moment 230 on the bendable rod 210.

As shown in Figure 2B, the force or moment 230 causes a deformation of the bendable rod 210 along a bending line. The sensors 224a, 224b,224c, 224d generate a signal that is indicative of the force or moment 230 that the fluid exerts on the bendable rod 210. For example, the sensors 224a, 224b,224c, 224d measure a strain along the bending line in form of a compression or a stretching caused by the deformation of the bendable rod 210.

The cable 222 may be connected to the sensors 224a, 224b, 224c, 224d and transmit the signal associated with a measured force or moment acting on the bendable rod 210. In some implementations, the cable 222 may be an electrical cable for transmitting an electrical signal, and the sensors 224a, 224b, 224c, 224d may include a strain gauge that generates the electrical signal. In other implementations, the cable 222 may be a fiber optical cable for transmitting an optical signal, and the sensors 224a, 224b, 224c, 224d may include an optical sensor.

Measurement apparatus 200 may include a processing system as described in more detail in Figure 6. Illustratively, the processing system is connected to the cable 222 and receives the signal from the sensors 224a, 224b, 224c, 224d via the cable 222. The processing system determines the velocity of the fluid relative to the vehicle based on the signal from the sensors 224a, 224b, 224c, 224d and the predetermined shape and stiffness of the bendable rod 210.

Figure 3A is a diagram of an illustrative bending rod 210 with series of aligned sensors 250a, 250b that are attached to the bendable rod 210 parallel to a neutral axis 240 of the bendable rod 210 at a predetermined distance from the neutral axis 240.

Illustratively, the series of aligned sensors 250a, 250b may perform the strain measurement by fiber segment interferometry (FSI). As shown in Figure 3A, each series of aligned sensors 250a, 250b may include a fiber optic cable 222 and optical reflectors 324a, 324b, 324c, 324d embedded at predetermined distances from each other in the fiber optic cable 222. Thus, the series of aligned sensors 250a, 250b form a continuous sensor chain.

In FSI, the strain on the bending rod 210 is measured as a change in the light propagation time through the measurement segments 350a, 350b, 350c, 350d. The optical reflectors 324a, 324b, 324c, 324d are used to measure the fiber length between two adjacent optical reflectors (e.g., adjacent optical reflectors 324c and 324d), which is calculated as the difference between the optical path distance of the optical reflectors. The processing system can convert a resulting phase change of a measurement segment (e.g., measurement segment 350c) into a measurand of interest, such as strain and temperature. Thus, the processing system determines tilt angles of the bendable rod 210 based on measuring a change in distance between pairs of adjacent optical reflectors 324c, 324d.

Illustratively, the sensors may include a preferably even number of series of aligned sensors 250a, 250b, 250c, 250d. If desired, any two series of aligned sensors (e.g., series 250a, 250b or series 250c, 250d) of the preferably even number of series of aligned sensors (250a, 250b, 250c, 250d) that are arranged on opposite sides of the neutral axis 240 can be connected at a distal end 215 of the bendable rod 210 from the vehicle.

Figure 3B is a cross-sectional view of the illustrative bendable rod 210 of Figure 3A with four series of aligned sensors 250a, 250b, 250c, 250d. As shown in Figure 3B, the four series of aligned sensors 250a, 250b, 250c, 250d may be evenly distributed around the neutral axis 240.

As an example, additional appropriate processing of the different strains in the processing system experienced by the corresponding fiber segments allows for a vertical shape change measurement by differential strain changes obtained from two opposite series of aligned sensors (e.g. series of aligned sensors 250a and 250b). For horizontal shape change measurement, the perpendicular to 250a and 250b arranged sensors 250c and 250d can be used in the same manner, enabling direct, independent measurement of the rod bending in the vertical and horizontal direction. When the bendable rod 210 bends along the target plane, a segment of one series of aligned sensors (e.g., series of aligned sensors 250a) lengthens and the corresponding segment of the other series of aligned sensors (e.g., series of aligned sensors 250b) on the opposite side of the bendable rod 210 shortens. The inclination of the bendable rod 210 can be determined directly via the measured segment (e.g., measurement segment 350c of Figure 3A), and from the integral over several segments (e.g., measurement segments 350a, 350b, 350c, 350d), the bending line of the bendable rod 210 can be determined. The processing system (e.g., processing system 610 of Figure 6) may determine a magnitude and a direction of the velocity of the fluid in a plane that is perpendicular to the bendable rod 210.

Thus, in the example of the rotary-wing aircraft 100 of Figure 1, the use of four series of aligned sensors arranged perpendicular to each other provides valuable additional information for determining the wind direction while hovering. A pilot may be able to use this additional information to avoid the dangerous vortex ring state. Furthermore, the pilot would have reliable speed information in flight directions other than forward flight, which would significantly increase situational awareness in a large number of operational missions.

The measurement apparatus 200 with the sensor arrangement 224 described in Figures 2A, 2B, 3A, and 3B can determine the velocity in a plane that is perpendicular to the longitudinal direction of the bendable rod 210 (i.e., perpendicular to the neutral axis 240). However, by adding another bendable rod with additional sensor in the plane perpendicular to the neutral axis 240 to the measurement apparatus, the measurement apparatus can determine a three-dimensional fluid flow direction.

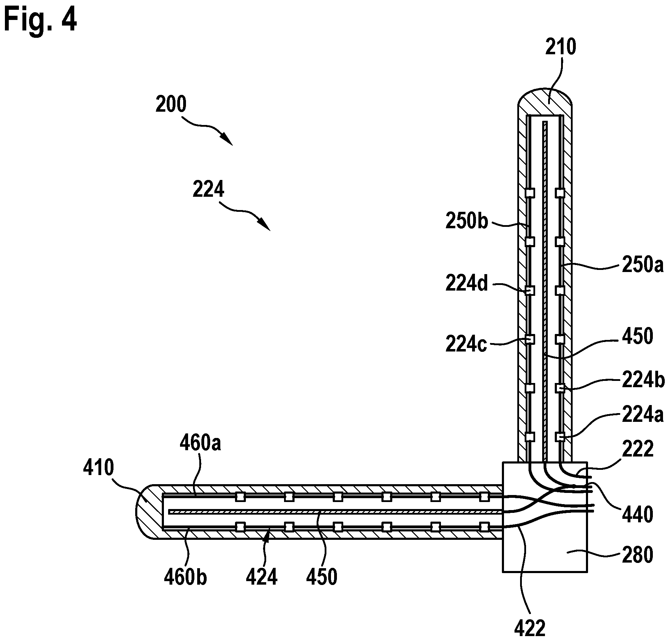

Figure 4 is a diagram of an illustrative sensor arrangement 224 with two bendable rods 210, 410 that are arranged perpendicular to each other. As shown in Figure 4, in addition to the bendable rod 210 and the sensors 224a, 224b, 224c, 224d, the sensor arrangement 224 includes an additional bendable rod 410 and additional sensors 424. The additional bendable rod 410 may have an additional predetermined shape and stiffness and be attached via the same base 280 as bendable rod 210 to the vehicle (e.g., rotary-wing aircraft 100 of Figure 1) perpendicular to the bendable rod 210.

The additional sensors 424 that are associated with the additional bendable rod 410 generate an additional signal that is indicative of an additional force or moment that the fluid exerts on the additional bendable rod 410. The additional sensors 424 may transmit the additional signal to the processing system (e.g., processing system 610 of Figure 6), for example via additional cable 422.

The processing system may determine a three-dimensional representation of the velocity of the fluid relative to the vehicle based on the signal and the additional signal.

As shown in Figure 4, two series of aligned sensors 250a, 250b may be associated with bendable rod 210 and connected via cable 222 with the processing system, and two separate series of aligned sensors 460a, 460b may be associated with bendable rod 410 and connected via cable 422 with the processing system. If desired, the sensor arrangement 224 of Figure 4 may include a single series of aligned sensors (i.e., series of aligned sensors 250a, 250b, 460a, 460b are serially coupled and connected via a single cable or wirelessly with the processing system).

In some implementations, the bendable rods 210, 410 may include a heating device 450 that is adapted for preventing icing of the bendable rod 210, 410. An electric cable 440 may be connected to the heating device 450 to provide electricity to the heating device 450.

If desired, a second, unheated sensor arrangement could potentially serve as an icing detector by comparing the bending line of the bending rod of the unheated sensor arrangement with the bending line of the bending rod of the heated sensor arrangement.

The sensor arrangement 224 shown in Figure 4 may increase the robustness and redundancy of the measurement, because the velocity of the fluid relative to the sensor arrangement 224 is captured by the sensors associated with both bending rods 210, 410 as long as the flow direction of the fluid is not parallel to the plane that is formed by the bending rods 210, 410.

A further increase in the redundancy and robustness of determining the velocity of a fluid relative to a vehicle can be achieved by arranging bendable rods with sensors in all three coordinate directions (i.e., perpendicular to each other).

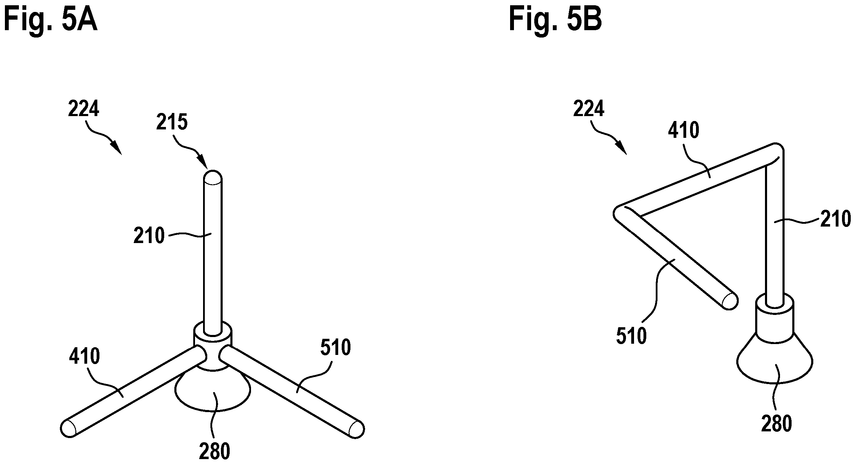

Figure 5A is a diagram of an illustrative sensor arrangement with three bendable rods 210, 410, 510 and associated sensors that are arranged perpendicular to each other and attached to a same base 280. The bendable rods 210, 410, 510 may have a respective predetermined shape and stiffness. The sensors may include separate series of aligned sensors that are associated with the different bendable rods 210, 410, 510 and connected via a cable with the processing system. In the scenario in which the series of aligned sensors are pairwise connected at a distal end 215 of the respective bendable rod from the base 280 (e.g., as shown in Figure 3A), difficulties may arise from tight radii at the distal end 215. In this scenario, the individual bendable rods 21, 410, 510 could be arranged serially.

Figure 5B is a diagram of an illustrative sensor arrangement 224 with three bendable rods 210, 410, 510 that are arranged serially and perpendicular to each other. Thus, the first end of bendable rod 210 is attached to the base 280, the first end of bendable rod 410 is attached to the second end of bendable rod 210, and the first end of bendable rod 510 is attached to the second end of bendable rod 410.

Illustratively, the sensor arrangement 224 of Figure 5B may include a single series of aligned sensors that is connected via a single cable or wirelessly with the processing system. If desired, the difficulties with the tight radii at the distal end 215 may be solved, for example, by using club-shaped or spherical forms at the distal ends 215 of the bendable rods of Figure 5A.

Figure 5C is a diagram of an illustrative sensor arrangement 224 with three bendable rods 210, 410, 510 that are arranged perpendicular to each other at a same base 280 and that have spherical shapes at the distal end 215 from the base 280 with two series of aligned sensors that are connected with each other in the spherical shapes. Figure 5C shows three-dimensional representations of bendable rods 410, 510 and a cross-section of bendable rod 210 with embedded sensors that are arranged in a single series of aligned sensors. Illustratively, bendable rods 410, 510 may both include a similar series of aligned sensors.

In some implementations, the bendable rods 210, 410, 510 may include shapes that are different than a sphere at the distal end 215 of the respective bendable rod. For example, the bendable rods 210, 410, 510 may each include ellipsoids or ovoids at the distal end 215.

Figure 6 is a diagram of an illustrative processing system 610 for an illustrative measurement apparatus. The processing system 610 receives a signal 620 from a sensor arrangement 224 such as sensor arrangement 224 of Figure 2B having sensors that are associated with a bendable rod. The processing system 610 determines the velocity of a fluid relative to a vehicle based on the signal 620 from the sensor arrangement 224 and a predetermined shape and stiffness of the bendable rod.

As shown in Figure 6, the processing system 610 provides a magnitude 670 and a direction 680 of the velocity relative to the vehicle to a display 650 and to an alert system 655.

Illustratively, the display 650 may display the magnitude 670 and the direction 680 of the velocity of the fluid relative to the vehicle, thereby making the information visually available (e.g., to a pilot of the rotary-wing aircraft 100 of Figure 1).

**If** desired, the alert system 655 may provide at least one of a visual alarm or an aural alarm when the magnitude 670 and/or the direction of the velocity of the fluid may put the vehicle in a perilous situation. As an example, the vehicle may be a helicopter and the processing system 610 may detect a risk of a vortex ring state. As another example, the vehicle may be a truck and the processing system 610 may detect a risk of the truck flipping over as a result of strong sidewinds.

Illustratively, the alert system 655 may sound a siren or make a clear voice announcement. As another example, the alert system 655 may flash a screen or display a message on a screen.

Illustratively, the sensor arrangement 224 (e.g., sensor arrangement 224 with bendable rod 210 and sensors 224a, 224b, 224c, 224d of Figure 2A, 2B, 3A, or 3B) may measure a strain in form of a compression or a stretching of the bendable rod caused by a force or moment that a fluid exerts on the bendable rod (e.g., as shown in Figure 2B). In response, the sensor arrangement 224 may generate a signal 620 that is indicative of the force or moment associated with the strain and send the signal 620 via a cable or wirelessly to the processing system 610.

Illustratively, the processing system 610 includes an interrogator. The interrogator may include a light source. By way of example, the interrogator may send light to a fiber optic sensor arrangement of sensor arrangement 224 such as the sensor arrangements described with reference to Figures 2A, 2B, 3A, 3B.

Processing system 610 may include a storage circuit 630. Storage circuit 630 may store information about the shape and stiffness of the bendable rod, information that correlates bending of the bendable rod with velocities of the fluid, information about the rigidity of the bendable rod in dependence on the ambient temperature, etc.

Illustratively, processing system 610 may include a processing unit 640. For example, processing unit 640 may retrieve data such as the information about the shape and stiffness of the bendable rod from the storage circuit 630.

If desired, processing unit 640 may include an arithmetic logic unit (ALU) 645. Arithmetic logic unit 645 may determine a magnitude 670 and a direction of the fluid flow 680 based on the information retrieved from the storage circuit 630 and the signal 620 received from the sensor arrangement.

As an example, storage circuit 630 may store a lookup table with magnitude 670 and direction 680 of the velocity depending on the measured force or moment acting on the bendable rod, and processing unit 640 may use the lookup table to retrieve the magnitude 670 and direction 680 of the velocity that correspond to the measured force or moment acting on the bendable rod.

As another example, processing unit 640 may use arithmetic logic unit 645 to compute magnitude 670 and direction 680 of the velocity based on a functional relationship between the bending moment and the measured force or moment acting on the bendable rod (e.g., a functional relationship that was determined during calibration of the measurement apparatus).

As yet another example, processing unit 640 may interrogate a trained machine learning engine to determine magnitude 670 and direction 680 of the velocity based on the measured force or moment acting on the bendable rod.

If desired, the processing unit 640 may record information for further processing and analyzing the recorded information (e.g., by storing the information in the storage circuit 630). For example, processing unit 640 may sample the magnitude 670 and/or the direction 680 of the fluid velocity in predetermined ranges over a duration of time (e.g., between two maintenance intervals).

If desired, the processing system 610 may provide the recorded information from the storage circuit 630 for further processing. As an example, the processing system 610 may provide the recorded information to a maintenance apparatus during maintenance. As another example, the processing system 610 may provide charts showing the magnitude and direction of the recorded information depending on the time.

If desired, processing unit 640 may include at least one of a system self-test function, a calibration function that is adapted to setting a zero-point reference or signal scaling factors, or an output function that is adapted to selecting between providing analogue or digital output signals.

The processing system 610 may be implemented using different discrete components. As shown in Figure 6, the discrete components may include a storage circuit 630, a processing unit 640, a display 650, and an alert system 655.

If desired, some or all discrete components of Figure 6 may be combined and integrated inside a single component. As an example, alert system 655 may be integrated into a display 650 with speakers. As another example, processing unit 640 may have embedded memory circuitry, thereby combining processing unit 640 and storage circuit 630.

It should be noted that the above described embodiments are merely described to illustrate possible embodiments of the present invention, but not in order to restrict the present invention thereto. Instead, multiple modifications and variations of the above described embodiments are possible and should, therefore, also be considered as being part of the invention.

For instance, the measurement apparatus described above in Figure 6 shows the display 650 and the alert system 655 as the only recipients of the magnitude 670 and the direction 680 of the fluid velocity. However, the storage circuit 630 may receive and store the magnitude and/or direction of the fluid velocity under certain predetermined conditions (e.g., whenever the magnitude and/or the direction of the fluid velocity exceeds a predetermined threshold value including the duration and timestamp, if desired). Alternatively, the alert system or any other component of the measurement apparatus may include an additional storage circuit that stores timestamps and magnitude and/or direction of the fluid velocity under predetermined conditions.

Furthermore, sensors 224a, 224b, 224c, 224d may be omitted from measurement apparatus 200 of Figure 2A and Figure 2B. Instead, a camera may observe the bendable rod 210, and the processing system 610 of Figure 6 may analyze the images transmitted by the camera to determine the force or moment that the fluid exerts on the bendable rod 210 and use the results of that analysis to determine a magnitude and a direction of the fluid relative to the vehicle based on the images from the camera and the predetermined shape and stiffness of the bendable rod 210.

### Reference List

- 100: rotary-wing aircraft, rotorcraft, helicopter
- 110: multi-blade rotor
- 112: rotor blade
- 114: rotor head
- 115: rotor shaft
- 117: rotor axis
- 119: rotor plane
- 120: fuselage
- 123: cabin
- 127: rear fuselage
- 130: tail boom
- 135: horizontal stabilizer
- 140: counter-torque device
- 145: tail rotor
- 150: fin
- 160: predetermined surface area affected by the downwash
- 200: measuring apparatus
- 201: sensor arrangement
- 210: bendable rod
- 215: distal end
- 222: fiber optic cable
- 224: sensor arrangement
- 224a, 224b, 224c, 224d: sensor
- 230: force or moment
- 240: neutral axis
- 250a, 250b, 250c, 250d: series of aligned sensors
- 260: hosting material
- 270: angle
- 280: base
- 324a, 324b, 324c, 324d: optical reflector
- 350a, 350b, 350c, 350d: measurement segment
- 410: bendable rod
- 422: additional cable
- 424: additional sensors
- 440: electric cable
- 450: heating device
- 460a, 460b: series of aligned sensors
- 510: bendable rod
- 610: processing system
- 620: signal
- 630: storage circuit
- 640: processing unit
- 645: arithmetic logic unit
- 650: display
- 655: alert system
- 660: retrieved data
- 670: velocity magnitude
- 680: velocity direction

## Claims

1. A measurement apparatus (200) for determining a velocity of a fluid relative to a vehicle (100), comprising:
a sensor arrangement (224) that is mounted to the vehicle (100) and that comprises:
a bendable rod (210) that is attached to the vehicle (100) and has a predetermined shape and stiffness, and
sensors (224a, 224b, 224c, 224d) that are associated with the bendable rod (210) and that generate a signal that is indicative of a force or moment (230) that the fluid exerts on the bendable rod (210); and
a processing system (610) that receives the signal (620) from the sensors (224a, 224b, 224c, 224d), and determines the velocity of the fluid relative to the vehicle (100) based on the signal (620) from the sensors (224a, 224b, 224c, 224d) and the predetermined shape and stiffness of the bendable rod (210).

2. The measurement apparatus (200) of claim 1, wherein the force or moment (230) causes a deformation of the bendable rod (210), and wherein the sensors (224a, 224b,224c, 224d) measure a strain in form of a compression or a stretching caused by the deformation of the bendable rod (210).

3. The measurement apparatus (200) of any one of claims 1 or 2, wherein the sensors (224a, 224b, 224c, 224d) comprise at least one of an electrical strain gauge, a piezo sensor, or an optical sensor.

4. The measurement apparatus (200) of any one of claims 1 or 2, wherein the bendable rod (210) has a neutral axis (240), and wherein the sensors (224a, 224b, 224c, 224d) further comprise:
at least one series of aligned sensors (250a, 250b) that is provided at the bendable rod (210) preferably parallel to the neutral axis (240) at a predetermined distance from the neutral axis (240).

5. The measurement apparatus (200) of claim 4, wherein the at least one series of aligned sensors (250a, 250b) comprises:
at least three series of aligned sensors (250a, 250b, 250c, 250d), and wherein the processing system (610) determines a magnitude and a direction of the velocity of the fluid in a plane that is perpendicular to the bendable rod (210).

6. The measurement apparatus (200) of claim 4, wherein the at least one series of aligned sensors (250a, 250b) comprises:
an even number of series of aligned sensors (250a, 250b, 250c, 250d), wherein any two series of aligned sensors (250a, 250b)(250c, 250d) of the even number of series of aligned sensors (250a, 250b, 250c, 250d) that are arranged on opposite sides of the neutral axis (240) are connected at a distal end (215) of the bendable rod (210) from the vehicle (100).

7. The measurement apparatus (200) of any one of claims 4 to 6, wherein a series of aligned sensors (250a) of the at least one series of aligned sensors (250a, 250b) comprises:
a fiber optic cable (222); and
optical reflectors (324a, 324b, 324c, 324d) embedded at predetermined distances from each other in the fiber optic cable (222).

8. The measurement apparatus (200) of claim 7, wherein the processing system (610) determines tilt angles of the bendable rod (210) based on measuring a change in distance between pairs of adjacent optical reflectors (324c, 324d) of the optical reflectors (324a, 324b, 324c, 324d).

9. The measurement apparatus (200) of any one of claims 4 to 8, wherein the bendable rod (210) further comprises:
a hosting material (260) comprising a composite material having a fiber orientation that forms a predetermined angle (270) with the neutral axis (240), and wherein the predetermined angle (270) is selected between 30 degrees and 60 degrees to prevent torsional movements of the bendable rod (210).

10. The measurement apparatus (200) of any one of claims 4 to 9, wherein the bendable rod (210) varies in thickness and/or in rigidity along the neutral axis (240).

11. The measurement apparatus (200) of any one of the preceding claims, wherein the sensor arrangement (224) further comprises:
an additional bendable rod (410) that is attached to the vehicle (100) perpendicular to the bendable rod (210) and has an additional predetermined shape and stiffness; and
additional sensors (424) that are associated with the additional bendable rod (410), generate an additional signal that is indicative of an additional force or moment that the fluid exerts on the additional bendable rod (410), and transmit the additional signal to the processing system (610), wherein the processing system (610) determines a three-dimensional representation of the velocity of the fluid relative to the vehicle (100) based on the signal (620) and the additional signal.

12. The measurement apparatus (200) of any one claims 1 to 10, further comprising:
an additional sensor arrangement (201) having additional sensors associated with an additional bendable rod that is attached to the vehicle (100) at a location that is protected from the fluid, and wherein the processing system (610) uses measurements related to another force or moment acting on the additional sensors for filtering out parasitic forces or parasitic moments acting on the sensors (224a, 224b, 224c, 224d).

13. The measurement apparatus (200) of any one of claims 1 to 10, wherein the bendable rod (210) further comprises:
a heating device (450) that is adapted for preventing icing of the bendable rod (210); and
an electric cable (440) that is connected to the heating device (450) and provides electricity to the heating device (450).

14. A rotary-wing aircraft (100) comprising the measurement apparatus (200) of any one of the preceding claims, further comprising:
a multi-blade rotor (110) that is at least adapted for generating lift in operation, the multi-blade rotor (110) comprising at least two rotor blades (112) that create a downwash during rotation of the main rotor (120) that affects a predetermined surface area (160) of the rotary-wing aircraft (100), and wherein the bendable rod (210) is attached to the rotary-wing aircraft (100) outside the predetermined surface area (160).

15. A method of operating a measurement apparatus (200) for determining a velocity of a fluid relative to a vehicle (100), the measurement apparatus (200) comprising a bendable rod (210) that is attached to the vehicle (100), comprising:
using sensors (224a, 224b, 224c, 224d) that are associated with the bendable rod (210) to measure a strain in the bendable rod (210) caused by a force or moment (230) that the fluid exerts on the bendable rod (210);
using the sensors (224a, 224b, 224c, 224d) to generate a signal that is indicative of the force or moment (230);
with a processing system (610), receiving the signal (620) from the sensors (224a, 224b, 224c, 224d);
using the processing system (610) to determine a bending of the bendable rod (210) based on the signal (620) from the sensors (224a, 224b, 224c, 224d);
using the processing system (610) to determine the force or moment (230) based on the bending of the bendable rod (210) and predetermined material properties of the bendable rod (210); and
using the processing system (610) to determine the velocity of the fluid relative to the vehicle (100) based on the force or moment (230) and geometrical properties of the bendable rod (210).
